# EUROPÄISCHE PATENTSCHRIFT

(11) **EP 1 561 984 B1**
(45) Veröffentlichungstag und Bekanntmachung des Hinweises auf die Patenterteilung: **26.03.2008**
(21) Anmeldenummer: 04002802.9
(22) Anmeldetag: 09.02.2004
(51) Int. Cl.: F16L 9/00, F16L 41/02

(54) **Anordnung zur Verbindung von Durchströmungsvorrichtungen**
Ducts connecting device
Dispositif de raccordement de conduits

(43) Veröffentlichungstag der Anmeldung: 10.08.2005
(73) Patentinhaber: Frape Behr S.A., 08040 Barcelona (ES)
(72) Erfinder: Gomez Escudero, Gerardo, 08912 Badalona/Barcelona (ES); Heinzelmann, Walter, Ulrich, 08041 Barcelona (ES); Lopez Bretons, Santiago, 08025 Barcelona (ES)
(74) Vertreter: Grauel, Andreas

(56) Entgegenhaltungen:
- EP-A- 0 806 598
- US-A- 1 801 091
- US-A- 3 336 056
- US-A- 3 476 869

## Beschreibung

Die Erfindung betrifft eine Anordnung zur Verbindung einer ersten Durchströmungsvorrichtung mit einem ersten Strömungskanal, einer ersten Wandung und einem ersten Verbindungsbereich mit mindestens zwei zweiten Durchströmungsvorrichtungen mit jeweils einem zweiten Strömungskanal, einer zweiten Wandung und einem zweiten Verbindungsbereich.

Um eine Strömungsverbindung zwischen dem ersten Strömungskanal und den zweiten Strömungskanälen zu erreichen, wird bei derartigen Anordnungen üblicherweise ein Zwischenstück, das häufig als sogenanntes T-Stück ausgebildet ist, verwendet. Ein bekanntes Zwischenstück weist jeweils einen Anschluß für die erste und jede zweite Durchströmungsvorrichtung auf, wobei sämtliche Anschlüsse miteinander kommunizieren, so daß ein Fluid von der ersten Durchströmungsvorrichtung auf die zweiten Durchströmungsvorrichtungen verteilbar oder von den zweiten Durchströmungsvorrichtungen auf die erste Durchströmungsvorrichtung sammelbar ist. Die Durchströmungsvorrichtungen werden hierzu in bekannter Weise an die jeweiligen Anschlüsse des Zwischenstückes angeschlossen.

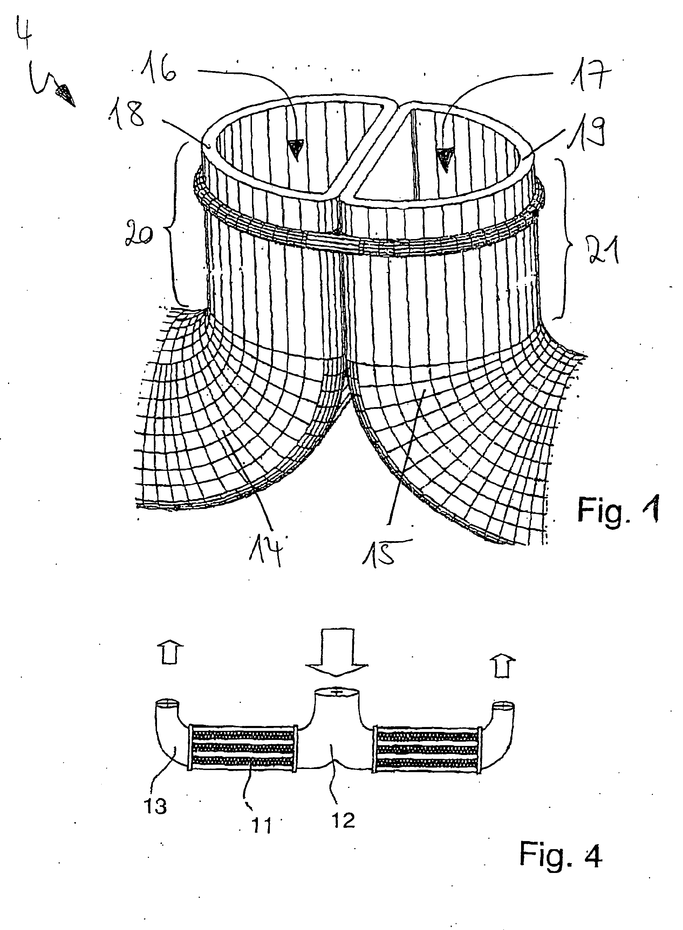

Ein Beispiel für ein Zwischenstück ist der Einströmkasten 12 des in Fig. 4 dargestellten Doppel-Wärmeübertragers. Ein durch einen großen Pfeil angedeutetes Fluid wird mittels des Einströmkastens 12 auf zwei einzelne Wärmeübertrager 11 verteilt, durchströmt diese von der Mitte der Wärmeübertrageranördnung nach außen, werden in Sammelkästen 13 gesammelt und verlassen die Anordnung in Richtung der kleinen Pfeile.

Der Einströmkasten 12 ist aus Festigkeitsgründen häufig ein kostenaufwendiges Metallgußteil, das mit den Wärmeübertragern 11 verschweißt ist. Aus Kostengründen werden derartige Wärmeübertrageranordnungen in der Regel nur bei Kleinserien verwendet. Wird der zentrale Einströmkasten als kostengünstigeres Kunststoff-Spritzguß-Teil hergestellt, ist mit fertigungstechnischen Problemen zu rechnen, da die bekannten Fertigungseinrichtungen zum Verstemmen von Einströmkasten 12 und mehreren, insbesondere gegenüberliegenden Wärmeübertragern 11 nicht ausgelegt sind.

Eine Anordnung gemäß dem Oberbegriff des Anspruchs 1 ist aus der Druckschrift US-A-1801091 bekannt.

Die erste Durchströmungsvorrichtung weist einen ersten Strömungskanal für das Fluid und eine erste Wandung sowie einen ersten Verbindungsbereich für eine Verbindung mit den zweiten Strömungsvorrichtungen auf. Andererseits weist jede zweite Durchströmungsvorrichtung einen zweiten Strömungskanal für das Fluid und eine zweite Wandung sowie einen zweiten Verbindungsbereich für eine Verbindung mindestens mit der ersten Durchströmungsvorrichtung auf.

Die zweiten Verbindungsbereiche sind gemeinsam in den ersten Verbindungsbereich aufnehmbar, wobei eine Strömungsverbindung zwischen dem ersten Strömungskanal und den zweiten Strömungskanälen gebildet wird. Dadurch wird unter Umständen ein Bauteil eingespart und ein Fertigungs- und/oder Montageaufwand reduziert.

Zwischen der ersten Wandung und zumindest einer zweiten Wandung ist ein erstes Dichtelement und zwischen zwei zweiten Wandungen ein zweites Dichtelement angeordnet. Hierdurch wird unter Umständen ein Austreten des durch die Durchströmungsvorrichtungen strömende Fluid aus der erfindungsgemäßen Anordnung verhindert oder zumindest verlangsamt.

In der ersten und/oder zumindest einer zweiten Wandung ist eine Aufnahme für ein Dichtelement vorgesehen. Hierdurch wird unter Umständen eine Montage des Dichtelementes erleichtert.

Diese Aufnahme für ein Dichtelement ist als zumindest teilweise umlaufende Vertiefung ausgebildet. Hierdurch ist das Dichtelement unter Umständen besonders einfach einlegbar und damit montierbar.

Es ist Aufgabe der Erfindung, eine Verbindungsanordnung der eingangs genannten Art zu verbessern, insbesondere hinsichtlich einer vereinfacht zu bewerkstelligenden Verbindung mehrerer Durchströmungsvorrichtungen.

Diese Aufgabe wird gelöst durch eine Anordnung zur Verbindung einer ersten Durchströmungsvorrichtung mit zumindest zwei zweiten Durchströmungsvorrichtungen mit den Merkmalen des Anspruchs 1. Eine solche Anordnung dient unter Umständen einer Verteilung eines Fluids aus der ersten Durchströmungsvorrichtung auf die zweiten Durchströmungsvorrichtungen oder einer Sammlung eines Fluids aus den zweiten Durchströmungsvorrichtungen auf die erste Durchströmungsvorrichtung.

Die erfindungsgemäße Anordnung eignet sich insbesondere für flüssige und/oder gasförmige Fluide, schließt aber die Verwendung von Fluiden in anderen Aggregatzuständen wie beispielsweise dem überkritischen nicht aus. Das Fluid ist beispielsweise ein Element, eine Verbindung oder ein Gemisch aus beliebig vielen Elementen und/oder Verbindungen, die insbesondere in unterschiedlichen Aggregatzuständen vorliegen.

Gemäß der Erfindung ist zumindest das erste Dichtelement mit zumindest dem zweiten Dichtelement einstückig ausgebildet. Hierdurch wird unter Umständen ein Fertigungs- und/oder Montageaufwand reduziert.

Weiter ist zumindest eine zweite Durchströmungsvorrichtung als Ladeluftkühler für ein Kraftfahrzeug, und die erste Durchströmungsvorrichtung als Anschlußleitung ausgebildet. Eine Anschlußleitung ist hierdurch unter Umständen auf einfache Weise an einen Wärmeübertrager anschließbar.

Vorteilhafte Ausgestaltungen sind Gegenstand der Unteransprüche.

Gemäß einer Ausführung der Erfindung ist die erste und/oder zumindest eine zweite Durchströmungsvorrichtung als Rohr oder als Schlauch ausgebildet. Hierdurch wird ein Montageaufwand unter Umständen zusätzlich verringert.

Gemäß einer Ausführung der Erfindung besteht die erste und/oder zumindest eine zweite Durchströmungsvorrichtung zumindest teilweise aus Kunststoff. Hierdurch ist unter Umständen eine kostengünstige Fertigung möglich.

Gemäß einer Ausführung der Erfindung weist der erste Verbindungsbereich eine kreis-, ellipsen-, oval- oder rechteckförmige Querschnittsfläche auf. Dies dient unter Umständen einer einfachen Bauweise. Insbesondere bei einer kreisförmigen Querschnittsfläche des ersten Verbindungsbereiches ist eine kreissegmentförmige Querschnittsfläche, wie beispielsweise eine halb- oder viertetkreisförmige Querschnittsfläche, zumindest eines zweiten Verbindungsbereiches unter Umständen vorteilhaft. Bei einer Ausführungsform weist jeder zweite Verbindungsbereich eine kreissegmentförmige Querschnittsfläche, auf. Insbesondere weisen alle zweiten Verbindungsbereiche eine gleiche Querschnittsfläche auf und ergänzen sich gegenseitig zu einer kreisförmigen Querschnittsfläche.

Gemäß einer Ausführung der Erfindung sind die Querschnitte zumindest zweier zweiter Verbindungsbereiche im wesentlichen gleich groß. Dadurch wird unter Umständen eine gleichmäßige Aufteilung des Fluids auf die zweiten Durchströmungsvorrichtungen unterstützt.

Gemäß einer Ausführung der Erfindung sind die Querschnitte zumindest zweier zweiter Verbindungsbereiche im wesentlichen gleich. Insbesondere sind zwei zweite Durchströmungsvorrichtungen symmetrisch, vorzugsweise spiegelbildlich, zueinander ausgebildet und/oder angeordnet und/oder durchströmbar. Dadurch wird unter Umständen eine Austauschbarkeit zweiter Durchströmungsvorrichtungen ermöglicht, so daß insbesondere eine vielseitige Anwendbarkeit der erfindungsgemäßen Anordnung erreicht wird.

Gemäß einer Ausführung der Erfindung enthält zumindest ein Dichtelement ein elastisches Material, wie beispielsweise Gummi. Insbesondere besteht ein Dichtelement im wesentlichen vollständig aus einem oder mehreren elastischen Materialien. Hierdurch wird unter Umständen eine Dichtwirkung verbessert.

Gemäß einer Ausführung der Erfindung ist, je nach Anwendungsgegebenheiten, die Anschlußleitung eine Zulaufleitung und/oder eine Ablaufleitung eines Wärmeübertragers.

Gemäß einer Ausführung der Erfindung umfaßt ein Wärmeübertrager einen Anström-Kanal und einen Abström-Kanal für ein zu kühlendes Fluid und ein Rohrnetz. In erfindungsgemäßer Ausgestaltung ist die Verwendung von kostengünstigen Kunststoff-Spritzguß-Teilen möglich. Die Wärmeübertrageranordnung ist beispielsweise spiegelbildlich bezüglich einer Ebene, gegebenenfalls bezüglich einer Mittellängsebene eines Kraftfahrzeugs ausgebildet. Eine derartig aufgeteilte Ausgestaltung ermöglicht unter Umständen einen raumsparenden Einbau, insbesondere in der Nähe eines weiteren Wärmeübertragers, wie beispielsweise eines Kraftfahrzeug-Kühlmittelkühlers. Ein derartiges Wärmeübertragersystem ist insbesondere für Ladeluft als zu kühlendes Fluid, aber auch für andere Fluide, wie beispielsweise Kühlmittel oder Öl geeignet.

Im Folgenden wird die Erfindung anhand von Ausführungsbeispielen unter Bezugnahme auf die Zeichnungen erläutert. Es zeigen:
- Fig. 1: eine erfindungsgemäße Verbindungsanordnung,
- Fig. 2: eine Verbindungsanordnung vor einer Montage und
- Fig. 3, 4: jeweils eine Verbindungsanordnung mit zwei Wärmeübertragern.

In Fig. 1 ist eine Anordnung 4 zur Verbindung einer für eine bessere Übersichtlichkeit nicht gezeigten ersten Durchströmungsvorrichtung mit zwei zweiten Durchströmungsvorrichtungen 14 und 15, die jeweils als Rohr ausgebildet sind. Die Verbindungsanordnung 4 dient einer Verteilung eines Fluids, insbesondere eines Gases oder einer Flüssigkeit, aus der vorteilhafterweise als flexibler Schlauch ausgebildeten ersten Durchströmungsvorrichtung auf die Rohre 14, 15.

Die Rohre 14 und 15 weisen jeweils einen zweiten Strömungskanal 16 bzw. 17 für das Fluid und eine zweite Wandung 18 bzw. 19 sowie einen zweiten Verbindungsbereich 20 bzw. 21 für eine Verbindung untereinander sowie mit der ersten Durchströmungsvorrichtung auf. Der erste Verbindungsbereich des ersten Schlauchs weist eine kreisförmige Querschnittsfläche auf, wohingegen die zweiten Verbindungsbereiche der Rohre 14 und 15 jeweils eine halbkreisförmige Querschnittsfläche aufweisen und sich gegenseitig zu einer kreisförmigen Gesamtquerschnittsfläche, die der Querschnittsfläche des sten Schlauchs entspricht, ergänzen. Um das Fluid gleichmäßig auf die beiden Rohre 14 und 15 aufzuteilen, sind die Querschnitte der zweiten Verbindungsbereiche 20 und 21 gleich und spiegelbildlich zueinander angeordnet und damit durchströmbar.

Im Bereich der zweiten Verbindungsbereiche 20 und 21 liegen die zweiten Wandungen 18 und 19 aneinander an, so daß die zweiten Verbindungsbereiche gemeinsam in den ersten Verbindungsbereich aufnehmbar sind, wobei eine Strömungsverbindung zwischen einem ersten Strömungskanal in dem ersten Schlauch und den zweiten Strömungskanälen 16 und 17 gebildet wird. Während einer Montage wird die in Fig. 1 gezeigte Anordnung beispielsweise in einen ersten Verbindungsbereich einer ersten Durchströmungsvorrichtung eingeführt oder eingesteckt oder ein solcher erster Verbindungsbereich wird auf die Anordnung aufgesteckt oder gestülpt.

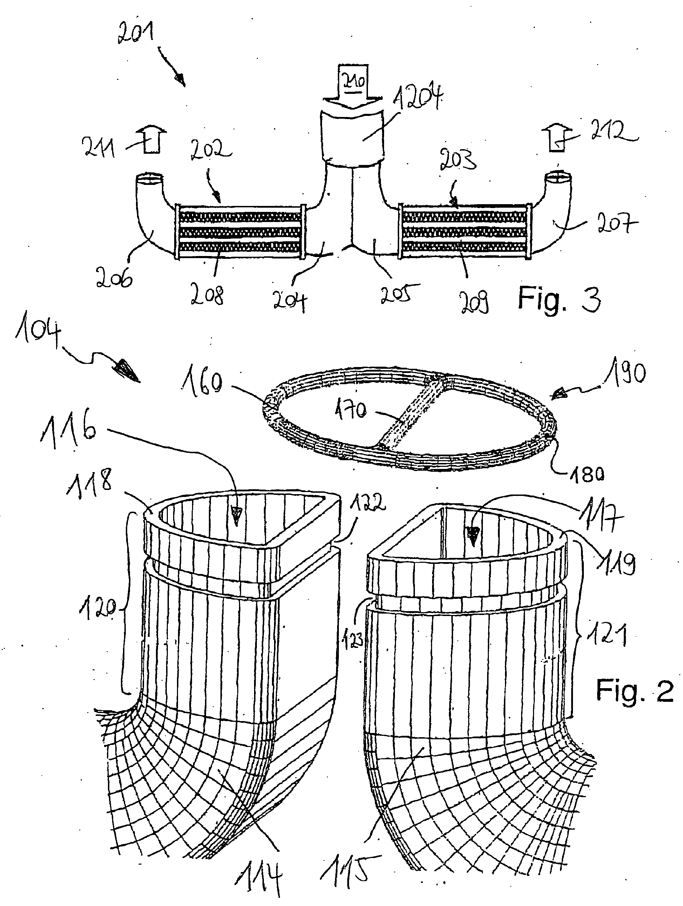

In Fig. 2 ist eine erfindungsgemäße Verbindungsanordnung 104 für eine bessere Übersichtlichkeit vor einer Montage gezeigt. Zwei zweite Rohre 114 und 115 mit zweiten Strömungskanälen 116 und 117 und zweiten Wandungen 118 und 119 sowie zweiten Verbindungsbereichen 120 und 121 sind für eine Durchströmung durch ein Fluid vorgesehen. Ein erstes Rohr mit einem ersten Strömungskanal für das Fluid, einer ersten Wandung sowie einem ersten Verbindungsbereich zu einer Aufnahme der zweiten Verbindungsbereiche 120 und 121 ist für eine bessere Übersichtlichkeit nicht dargestellt.

Für eine Abdichtung zwischen der ersten Wandung und der zweiten Wandung 118 ist ein erstes Dichtelement 160 vorgesehen. Ebenso ist für eine Abdichtung zwischen der ersten Wandung und der zweiten Wandung 119 ein erstes Dichtelement 180 vorgesehen. Ein zweites Dichtelement 170 ist für eine Abdichtung zwischen den zweiten Wandungen 118 und 119 vorgesehen. Dadurch wird ein Austreten des durch die Durchströmungsvorrichtungen strömenden Fluids aus der Verbindungsanordnung 104 verhindert. Die ersten Dichtelemente 160 und 180 sind zusammen mit dem zweiten Dichtelement 170 einstückig ausgebildet, so daß ein vorzugsweise aus Gummi bestehendes 8-förmiges Dichtelement 190 gebildet wird.

Die Dichtwirkung des Dichtelementes 190 wird unterstützt durch zweite Aufnahmen 122 und 123 in den zweiten Wandungen 118 bzw. 119. Die Aufnahmen 122 und 123 sind als umlaufende Vertiefungen ausgebildet und nehmen sowohl die ersten Dichtelemente 160 und 180 als auch das zweite Dichtelement 170 auf. Das Dichtelement 190 ist also einfach in die Aufnahmen 122 und 123 einlegbar, so daß ein Montageaufwand für die Verbindungsanordnung 104 reduziert ist.

Gemäß einer nicht in den Zeichnungen dargestellten Variante ist eine Verbindungsanordnung in drei oder mehr zweite Durchströmungsvorrichtungen möglich, wofür die entsprechenden zweiten Strömungskanäle beispielsweise drittelkreisförmig und das Dichtelement gegebenenfalls mit drei entsprechenden Öffnungen ausgebildet ist.

Fig. 3 zeigt eine Anordnung 201 zur Verbindung zweier Wärmeübertrager 202 und 203 mit einer Anschlußleitung 1204. Die Wärmeübertrager 202 und 203 weisen dabei jeweils einen Anström-Kasten 204 bzw. 205 mit einem darin befindlichen Anström-Kanal und einen Abström-Kasten 206 bzw. 207 mit einem darin befindlichen Abström-Kanal für ein zu temperierendes, insbesondere zu kühlendes Fluid sowie ein zwischen den Kästen 204 und 206 bzw. 205 und 207 angeordnetes Rohr-Rippen-Netz 208 bzw. 209 auf. Die Kästen 204, 205, 206 und/oder 207 sind vorteilhafterweise aus Kunststoff hergestellt.

Die Wärmeübertrageranordnung 201 ist spiegelbildlich bezüglich einer Ebene ausgebildet. Das zu kühlende Fluid strömt in Richtung des Pfeiles 210 durch die Anschlußleitung 1204, wird gleichmäßig auf die beiden Wärmeübertrager 202 und 203 aufgeteilt und verläßt schließlich die Anordnung 204 in Richtung der Pfeile 211 bzw. 212.

## Patentansprüche

1. Anordnung zur Verbindung einer ersten Durchströmungsvorrichtung mit zumindest zwei zweiten Durchströmungsvorrichtungen (14, 15, 114, 115), wobei die erste Durchströmungsvorrichtung einen ersten Strömungskanal und eine erste Wandung sowie einen ersten Verbindungsbereich aufweist, und jede zweite Durchströmungsvorrichtung (14, 15, 114, 115) einen zweiten Strömungskanal (16, 17, 116, 117) und eine zweite Wandung (18, 19, 118, 119) sowie einen zweiten Verbindungsbereich (20, 21, 120, 121) aufweist, wobei die zweiten Verbindungsbereiche (20, 21, 120, 121) unter Bildung einer Strömungsverbindung zwischen dem ersten Strömungskanal und den zweiten Strömungskanälen (16, 17, 116, 117) gemeinsam in den ersten Verbindungsbereich aufnehmbar sind, wobei zwischen der ersten Wandung und zumindest eine der zweiten Wandungen (18, 19, 118, 119) ein erstes Dichtelement (160, 180) angeordnet ist, wobei zwischen zwei zweiten Wandungen (18, 19, 118, 119) ein zweites Dichtelement (170) angeordnet ist, wobei in der ersten und/oder zumindest einer zweiten Wandung (18, 19, 118, 119) eine Aufnahme (122, 123) für ein Dichtelement (160, 170, 180) vorgesehen ist, die als zumindest teilweise umlaufende Vertiefung ausgebildet ist
**dadurch gekennzeichnet, dass**
zumindest das erste Dichtelement (160, 180) mit zumindest dem zweiten Dichtelement (170) einstückig ausgebildet ist und zumindest eine zweite Durchströmungsvorrichtung (14, 15, 114, 115) als Ladeluftkühler für ein Kraftfahrzeug, und die erste Durchströmungsvorrichtung als Anschlussleitung ausgebildet ist.

2. Anordnung nach Anspruch 1, **dadurch gekennzeichnet, dass** die erste und/oder zumindest eine zweite Durchströmungsvorrichtung (14, 15, 114, 115) als Rohr oder als Schlauch ausgebildet ist.

3. Anordnung nach einem der vorhergehenden Ansprüche, **dadurch gekennzeichnet, dass** die erste und/oder zumindest eine zweite Durchströmungsvorrichtung (14, 15, 114, 115) zumindest teilweise aus Kunststoff besteht.

4. Anordnung nach einem der vorhergehenden Ansprüche, **dadurch gekennzeichnet, dass** der erste Verbindungsbereich eine kreis-, ellipsen-, oval- oder rechteckförmige Querschnittsfläche aufweist.

5. Anordnung nach einem der vorhergehenden Ansprüche, **dadurch gekennzeichnet, dass** zumindest ein zweiter Verbindungsbereich (20, 21, 120, 121) eine kreissegmentförmige Querschnittsfläche aufweist.

6. Anordnung nach einem der vorhergehenden Ansprüche, **dadurch gekennzeichnet, dass** die Querschnitte zumindest zweier zweiter Verbindungsbereiche (20, 21, 120, 121) im Wesentlichen gleich groß sind.

7. Anordnung nach einem der vorhergehenden Ansprüche, **dadurch gekennzeichnet, dass** die Querschnitte zumindest zweier zweiter Verbindungsbereiche (20, 21, 120, 121) im Wesentlichen gleich sind.

8. Anordnung nach einem der vorhergehenden Ansprüche, **dadurch gekennzeichnet, dass** zumindest zwei zweite Durchströmungsvorrichtungen (14, 15, 114, 115) symmetrisch, insbesondere spiegelbildlich, zueinander ausgebildet und/oder angeordnet und/oder durchströmbar sind.

9. Anordnung nach einem der vorhergehenden Ansprüche, **dadurch gekennzeichnet, dass** zumindest ein Dichtelement (160, 170, 180) ein elastisches Material enthält.

10. Anordnung nach einem der vorhergehenden Ansprüche, **dadurch gekennzeichnet, dass** die Anschlussleitung eine Zulaufleitung, insbesondere eines Wärmeübertragers ist.

11. Anordnung nach einem der vorhergehenden Ansprüche 1 bis 9, **dadurch gekennzeichnet, dass** die Anschlussleitung eine Ablaufleitung, insbesondere eines Wärmeübertragers ist.

## Claims

1. Arrangement for connecting a first duct to at least two second ducts (14, 15, 114, 115), wherein the first duct comprises a first flow passage and a first wall and a first connecting region, and wherein each of the second ducts (14, 15, 114, 115) comprises a second flow passage (16, 17, 116, 117) and a second wall (18, 19, 118, 119) and a second connection region (20, 21, 12D, 121), wherein the second connection regions (20, 21, 120, 121) can be jointly accommodated in the first connecting region to provide a flow connection between the first flow passage and the second flow passages (16, 17, 116, 117), wherein a first sealing element (160, 180) is provided between the first wall and at least one of the second walls (18, 19, 118, 119), wherein a second sealing element (17) is provided between two second walls (18, 19, 118, 119), at least the first sealing element (160, 180) being designed integral with the second sealing element (170), wherein, in the first and/or at least in one of the second walls (18,19, 118, 119), there is provided a location (122, 123) designed as an at least partially continuous recess for a sealing element (160, 170, 180), **characterised in that** at least one of the second ducts (14, 15, 114, 115) is designed as an intercooler for a motor vehicle and the first ducts is designed as a connecting line.

2. Arrangement according to claim 1, **characterised in that** the first duct and/or at least one of the second ducts (14, 15, 114, 115) are/is designed as a pipe or a tube.

3. Arrangement according to any of the preceding claims, **characterised in that** the first duct and/or at least one of the second ducts (14, 15, 114, 115) are/is at least partially made of plastic.

4. Arrangement according to any of the preceding claims, **characterised in that** the first connecting region has a circular, elliptical, oval or rectangular cross-sectional area.

5. Arrangement according to any of the preceding claims, **characterised in that** at least one of the second connecting regions (20, 21, 120, 121) has a cross-sectional area in the shape of a circular segment.

6. Arrangement according to any of the preceding claims, **characterised in that** the cross-sections of at least two of the second connecting regions (20, 21, 120, 121) are substantially equal in size.

7. Arrangement according to any of the preceding claims, **characterised in that** the cross-sections of at least two of the second connecting regions (20, 21, 120, 121) are substantially identical.

8. Arrangement according to any of the preceding claims, **characterised in that** at least two of the second ducts (14, 15, 114, 115) are designed and/or arranged and/or capable of being passed through symmetrically, in particular as mirror images of one another.

9. Arrangement according to any of the preceding claims, **characterised in that** at least one of the sealing elements (160, 170, 180) includes a flexible material.

10. Arrangement according to any of the preceding claims, **characterised in that** the connecting line is a supply line, in particular of a heat exchanger.

11. Arrangement according to any of claims 1 to 9, **characterised in that** the connecting line is a discharge line, in particular of a heat exchanger.

## Revendications

1. Dispositif de raccordement d'un premier conduit à au moins deux deuxièmes conduits (14, 15, 114, 115), le premier conduit comprenant un premier canal d'écoulement et une première paroi ainsi qu'une première zone de liaison, et chaque deuxième conduit (14, 15, 114, 115) comprenant un deuxième canal d'écoulement (16, 1.7, 116, 117) et une deuxième paroi (18, 19, 118, 119) ainsi qu'une deuxième zone de liaison (20, 21, 120, 121), les deuxièmes zones de liaison (20, 21, 120, 121) pouvant être reçues conjointement dans la première zone de liaison en formant une liaison d'écoulement entre le premier canal d'écoulement et les deuxièmes canaux d'écoulement (16, 17, 116, 117), un premier élément d'étanchéité (160, 180) étant disposé entre la première paroi et au moins une des deuxièmes parois (18, 19, 118, 119), un deuxième élément d'étanchéité (170) étant disposé entre deux deuxièmes parois (18, 19, 118, 119), un logement (122, 123) pour un élément d'étanchéité (160, 170, 180) étant prévu dans la première et/ou au moins une deuxième paroi (18, 19, 118, 119), ledit logement étant réalisé comme un creux au moins partiellement périphérique, **caractérisé en ce qu'**au moine le premier élément d'étanchéité (160, 180) est réalisé d'une seule pièce avec au moins le deuxième élément d'étanchéité (170) et au moins un deuxième conduit (14, 15, 114, 115) est conçu comme refroidisseur d'air d'alimentation pour un véhicule automobile, et le premier conduit est conçu comme conduite de raccordement.

2. Dispositif selon la revendication 1, **caractérisé en ce que** le premier et/ou au moins un deuxième conduit (14, 15, 114,115) est conçu comme tube ou comme tuyau.

3. Dispositif selon l'une quelconque des revendications précédentes, **caractérisé en ce que** le premier et/ou au moins un deuxième conduit (14, 15, 114, 115) est au moins partiellement en matière plastique.

4. Dispositif selon l'une quelconque des revendications précédentes, **caractérisé en ce que** la première zone de liaison présente une aire de section circulaire, elliptique, ovale ou rectangulaire.

5. Dispositif selon l'une quelconque des revendications précédentes, **caractérisé en ce que** au moins une deuxième zone de liaison (20, 21, 120, 121) présente une aire de section en forme de segment de cercle.

6. Dispositif selon l'une quelconque des revendications précédentes, **caractérisé en ce que** les sections d'au moins deux deuxièmes zones de liaison (20, 21, 120, 121) sont sensiblement de même grandeur.

7. Dispositif selon l'une quelconque des revendications précédentes, **caractérisé en ce que** les sections d'au moins deux deuxièmes zones de liaison (20, 21, 120, 121) sont sensiblement identiques.

8. Dispositif selon l'une quelconque des revendications précédentes, **caractérisé en ce qu'**au moins deux deuxièmes conduits (14, 15, 114, 115) peuvent être traversés et/ou sont disposés et/ou sont réalisés de manière symétrique, en particulier inversée, l'un par rapport à l'autre.

9. Dispositif selon l'une quelconque des revendications précédentes, **caractérisé en ce qu'**au moins un élément d'étanchéité (160, 170, 180) contient un matériau élastique.

10. Dispositif selon l'une quelconque des revendications précédentes, **caractérisé en ce que** la conduite de raccordement est une conduite d'amenée, en particulier d'un échangeur de chaleur.

11. Dispositif selon l'une quelconque des revendications précédentes 1 à 9, **caractérisé en ce que** la conduite de raccordement est une conduite d'évacuation, en particulier d'un échangeur de chaleur.
